Europäisches Patentamt

(19) European Patent Office

Office européen des brevets

(11) Publication number : **0 463 019 B1**

(12) **EUROPEAN PATENT SPECIFICATION**

(45) Date of publication of patent specification :
27.10.93 Bulletin 93/43

(51) Int. Cl.⁵ : **G01J 3/02**

(21) Application number : **90904359.8**

(22) Date of filing : **12.03.90**

(86) International application number :
**PCT/FI90/00063**

(87) International publication number :
**WO 90/10851 20.09.90 Gazette 90/22**

(54) **A METHOD FOR DISTINGUISHING OVERLAPPING ABSORPTION BANDS OF AN INFRARED SPECTRUM FROM ONE ANOTHER.**

(30) Priority : **13.03.89 FI 891170**
**29.12.89 FI 896328**

(43) Date of publication of application :
**02.01.92 Bulletin 92/01**

(45) Publication of the grant of the patent :
**27.10.93 Bulletin 93/43**

(84) Designated Contracting States :
**AT BE CH DE DK ES FR GB IT LI LU NL SE**

(56) References cited :
**EP-A- 0 158 506**
**WO-A-85/00655**
**US-A- 4 441 815**
**US-A- 4 557 601**

(73) Proprietor : **VALTION TEKNILLINEN**
**TUTKIMUSKESKUS**
**Tellervonkatu 5**
**SF-40100 Jyväskylä (FI)**

(72) Inventor : **LINNA, Veli**
**Tyyppäläntie 56**
**SF-40250 Jyväskylä (FI)**
Inventor : **RANTANEN, Jarmo**
**Pohjanaho 8 A 4**
**SF-40520 Jyväskylä (FI)**

(74) Representative : **Enskat, Michael Antony Frank**
**et al**
**Saunders & Dolleymore 9, Rickmansworth**
**Road**
**Watford Hertfordshire WD1 7HE (GB)**

## Description

This invention relates to a method for distinguishing overlapping absorption bands of an infrared spectrum from one another, in which the absorption bands of a gas being measured and of some interfering gas compound overlap in the same wave number region, in which case the recognition and length measurement on the basis of the spectrum of the gas to be measured is quite impossible.

Modern spectrometers are connected to a computer, which is able to record the measured spectrum and to compare it with spectra that have been measured previously. In addition the computer makes possible the handling and automatic calculation of spectrum-data. Such a spectrometer is shown in US-A-4 441 815.

In itself it is quite a usual phenomenon for the absorption bands of two gases to coincide. For example the larger absorption band of $N_2O$ remains beneath the strong absorption bands of $CO_2$ and CO gases. Treatment programs are known that reduce the measurement gas spectrum of a desired substance simply by only reducing the predetermined intensities of the spectra of the desired substance multiplied by a certain standard coefficient from the measured intensities. The method is, however, imprecise, nor can it be used the determine the contents of remaining gases, because the remaining spectrum is distorted. The object of this invention is to create a new kind of infrared spectra treatment method, which will make the distinction of overlapping absorption bands possible in such a way that the corrected spectrum corresponds to the calculatory correct spectrum of the desired object without an interfering gas compound. This object is achieved by the features of the invention as they are presented in the accompanying Patent Claims.

In what follows the invention is illustrated with the aid of examples and the accompanying figures.

Figure 1       shows the use of the invention in determining the dinitrogen oxide ($N_2O$) content of flue gases.

Figure 2       shows the removal of water vapour from the spectrum.

Figure 3       shows one type of computer program for carrying out the correction in Figure 2.

The invention is applied using a Perkin-Elmer 1760 spectrometer, which includes a programmable microcomputer, model 7700, for analysing and calculating spectra. The lower spectra SO in the figure has been obtained directly from a flue gas. In this case the upper spectrum S2 is the pure spectrum of the measured gas i.e. dinitrogen oxide at a known wavelength. Similar pure spectra are also required for the interfering gas compounds, which are in this case carbon dioxide $CO_2$, carbon monoxide CO, water vapour $H_2O$, and methane $CH_4$, the spectra of which are entered in the memory. It is not necessary to know the actual content of the interfering gas compounds.

In this case the absorption of the carbon dioxide and carbon monoxide is so strong that the strongest absorption band of the dinitrogen oxide (at a wavelength of 2220 cm$^{-1}$) cannot be distinguished directly from the measured spectrum. In this case, however, the second absorption band of the $CO_2$ is in the area without interference and on its basis the relative content value of the $CO_2$ can be determined. For example the absorption band of carbon dioxide in the area of the wavelength 3700 cm$^{-1}$ can be determined as a so-called clear area, which means that only carbon dioxide causes absorption at this point. By comparing the intensity or surface area measured from this point with the pure spectrum in corresponding magnitudes contained in the memory the relative content value of the interfering compound can be calculated. The calculation can be carried out using the surface area, derivative, or intensity of an individual point of a limited area. If the content is determined on the basis of an individual point of the absorption band, the following content equation is obtained

$$(1) \qquad c \ = \ 1/\varepsilon \ b \ \ln(I_0/I_1)$$

in which c is the gas content, $\varepsilon$ is the molar absorption coefficient, b is the distance travelled by a ray in the sample area, $I_0$ is the intensity of the original radiation, $I_1$ is the intensity of the radiation penetrating the sample area

Carbon monoxide (CO) does not have entire absorption bands in the area without interference. In this case, however, the right-hand edge of the absorption peak of CO (area wavelength 2140 cm$^{-1}$) is in an area without interference, in which case the relative content of CO can be determined on the basis of this part of the absorption band. The same kind of operation can be carried out for the other interfering compounds, once the pure areas specific to them have first been determined.

After calculating the content of the interfering compound its absorption curve for the calculated content can be calculated over the whole area in accordance with the following equation:

$$(2) \qquad I_1(k) \ = \ I_0(k) \ [I_2(k)/I_0(k)] \ ^{c_1/c_2}$$

in which $I_1(k)$ is the calculated intensity value of the spectrum of the interfering gas compound at the point of wavelength k, $I_2(k)$ is the intensity value of the model spectrum of the interfering gas compound in the computer memory, at the point of wavelength k, $I_0(k)$ is the intensity of the radiation arriving at point k, $c_1$ is the measured relative content value for the interfering gas compound, $c_2$ is the comparative content value for the interfering gas compound, determined on the basis of the spectrum in the memory of the computer

As can be seen from formula (2), only the relation of contents $c_1/c_2$ appears in the calculated formula of the spectrum of the interfering gas compound, so that it is not necessary to know the real contents. It suffices if the relative values are known. For this reason a comparative value can be set for the gas of the model spectrum, if the absolute value is not available.

According to formula (2), the intensity of the spectrum of the interfering gas compound is calculated at each point in the spectrum in turn. In practice the calculation is most rapid by using the ready function operations that are part of the spectrum treatment program of the device, which can be aimed at one time at the entire spectrum. The ready operations that are included in analysis programs of this kind are, for example, the mutual division and multiplication of the spectrum or multiplication by a standard number and logarithmic and antilogarithmic calculation of the entire spectrum. The interfering spectrum is then rapidly obtained from the formula

$$(3) \qquad I_1/I_0 \; = \; a \log [c_1/c_2 \log (I_2/I_0)]$$

in which $I_1$ is the calculated interfering gas compound spectrum, $I_2$ is the model spectrum of the interfering gas compound, $I_0$ is the spectrum of the arriving radiation, $c_1$ and $c_2$ are as in formula (2)

This calculated suppression of intensity or absorption is removed from the measured spectrum by dividing the measured spectrum by the spectrum of the interfering gas compound. The division can, however, only be carried out at those points at which the intensity has a value deviating from zero. In any event sufficient of the absorption band of the gas being measured, in this case nitrogen dioxide, is revealed from behind the interfering gas compound that it can be recognized and its content calculated. A similar correction is also made in relation to water vapour, when the spectrum in the middle of the illustration is obtained, which shows the absorption without the effect of interfering gas compounds, at the selected wavelength. Here the correction is only made for part of the area of the spectrum. The contents of nitrogen oxides, $N_2O$ and $NO_2$ can now be calculated from the corrected spectrum using known methods.

If regular inaccuracy appear in the construction of the spectrum of the interfering gas compound, it may be corrected by iteration. In the accompanying illustration $H_2O$, $CO_2$, CO, and $CH_4$ have been removed from the lowest spectrum, in which case $N_2O$ and $NO_2$ appear in a pure form (middle spectrum). In the illustration the weaker absorption band of $N_2O$ is in the wavelength area 1240 - 1330 $cm^{-1}$, which also coincides with the absorption band of methane ($CH_4$). The interference peak of methane can be removed by means of the absorption band that occurs in its pure area (3020 $cm^{-1}$). By determining the content value of methane from this peak, the interfering peak that occurs of top of the $N_2O$ band can be removed by calculation.

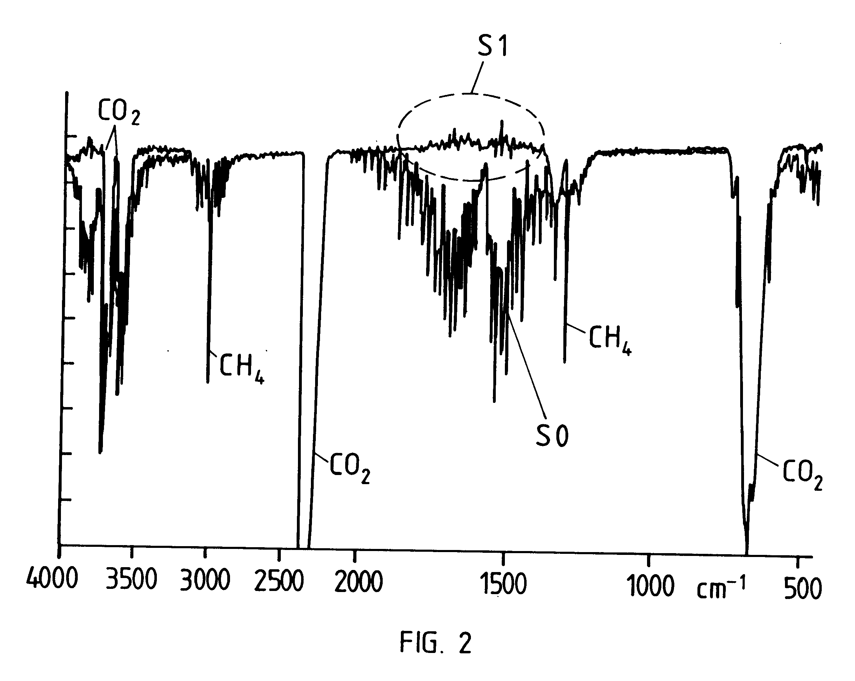

Figure 2 shows another example of the invention in practice. At the point in the illustration shown with broken lines the suppression of water vapour $H_2O$ is removed from the measured spectrum S0 by calculation. In this case the comparative content of the pure spectrum has deviated considerably from the water vapour content of the sample gas. This in turn leads to a large correction, which can be seen as an increase in noise in the corrected spectrum S1. Because of this a level base line is not obtained after the correction. A partial cause is also the great noise of the measured spectrum S0.

In the previous example it is advantageous if there are several pure spectrum samples, corresponding to different contents. The closest possible comparative spectrum relative to the interfering gas compound can then be selected, when the calculatory correction to be carried out is the least possible. This also reduces the effect of the noise, even if it is not possible to remove the noise that has been created in the measurement.

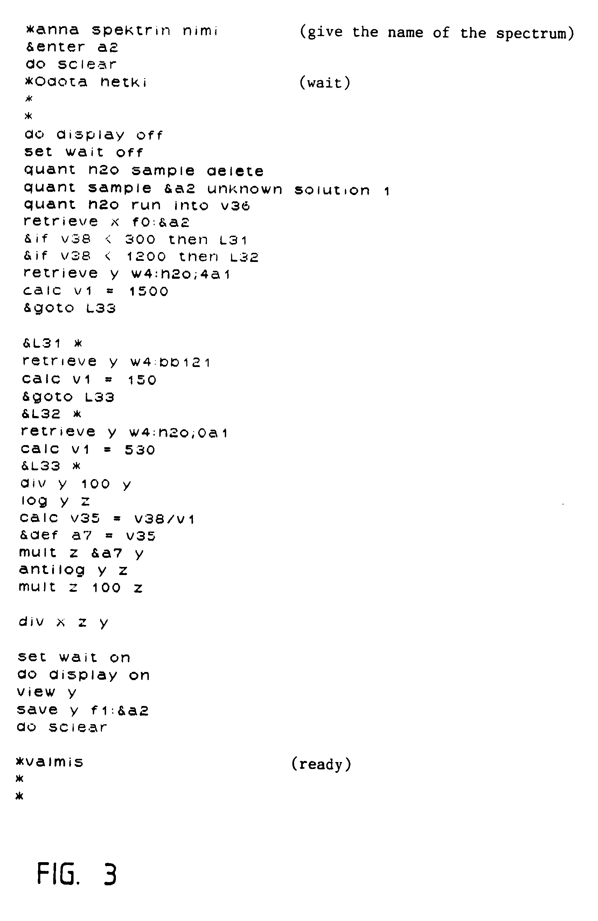

The program in Figure 3 has been written for the abovementioned spectrometer and its computer. A corresponding program can be applied to other spectrometers too. This program removes the effect of water vapour $H_2O$ from the measured spectrum. A similar program is required for each area of interference that is is desired to remove from the measured spectrum.

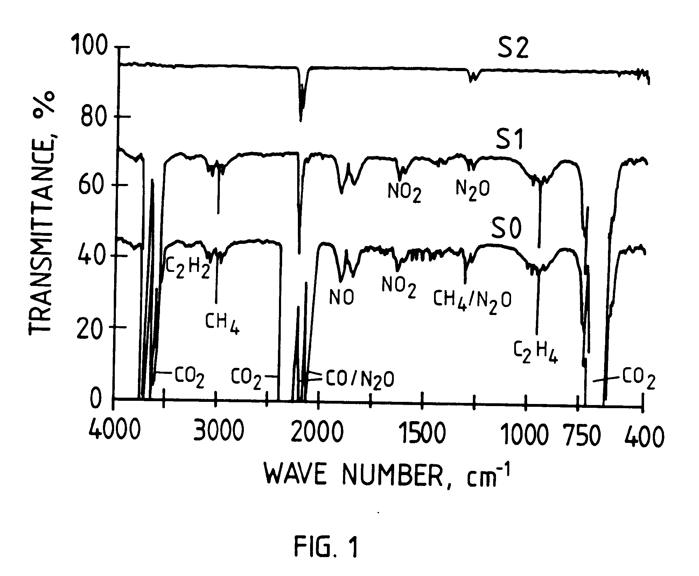

The program shown uses three pure water spectra, which correspond to different content values. These and corresponding content values are entered into the memory of the computer before measuring. The measured spectrum S0 is registered in the memory of the machine. Once the area of the spectrum that is free of interference has been determined, the program can be used. There are no other gases that would absorb infrared radiation in the area of the sample gas that is free of interference. The program provides as a result a corrected, or "cleaned" spectrum S1. The same references S0 and S1 are used in Figures 1 and 2 for corresponding spectra.

It is not always necessary to accurately determine the content of the gas being measured, but only to note its appearance in the gas. In this case the calculation can be carried out in such a way that the absorption effect of the interfering gas compound is deducted directly from the spectrum being measured. Calculated in this way less noise remains in the base line of the spectra that in the method of calculation previously described. The direct deduction, however, distorts the intensity of the absorption band revealed beneath the interfering gas compound, so that this method cannot be applied when determining the content of a gas. Especially is the absorption band of the interfering gas compound is strong, the intensity relations become strong distorted.

## Claims

1. A method for the separation of overlapping absorption bands of a spectrum from one another, in which a part of the absorption bands of a gas being measured and of an interfering gas compound occur in the same wavelength area, characterized in that the method consists of the following stages:
   - a pure spectrum of the interfering gas compound at the comparative content is entered into a memory;
   - a pure wavelength area is chosen from the interfering gas compound spectrum, which does not overlap the spectrum of any other substance contained in the gas being investigated;
   - the spectrum (S0) of the gas mixture being investigated is measured and entered in the memory;
   - the wavelength area of the abovementioned pure area is determined from the measured spectrum, and the relative content value of the interfering gas compound in the gas being investigated is calculated by means of it;
   - the spectrum of the interfering gas compound is calculated by means of the calculated content value, when the interfering spectrum contained in the measured spectrum is obtained;
   - the measured spectrum is divided by the calculated interference spectrum, in which a corrected spectrum (S1) is obtained.

2. A method in accordance with Patent Claim 1, characterized in that in order to reconstruct the spectrum of the interfering gas compound the surface area of the measured spectrum is determined at the aforesaid wavelength of the pure area, which is compared to the corresponding surface area calculated from the pure spectrum of the interfering gas compound at a comparative content, by means of which the content relation is calculated and from that the aforementioned interfering spectrum.

3. A method in accordance with Patent Claims 1 or 2, characterized in that before measurement the spectra of two or more interfering gas compounds are entered, which correspond to different content values, and that the comparative spectrum that is closest to the measured spectrum in relation to the interfering gas compound is chosen from them.

## Patentansprüche

1. Verfahren zum Abtrennen überlappender Absorptionsbanden eines Spektrums, in welchem ein Teil der Absorptionsbanden eines untersuchten Gases und eines störenden Gasbestandteils im selben Wellenzahlbereich erscheinen, dadurch gekennzeichnet, daß es die folgenden Schritte aufweist:
   - ein Spektrum einer reinen Verbindung in einer der Menge des störenden Gasbestandteils entsprechenden Menge wird in einem Speicher abgespeichert;
   - aus dem Spektrum des störenden Gasbestandteils wird ein reiner Wellenzahlbereich ausgewählt, welcher mit dem Spektrum jeder anderen in dem untersuchten Gas enthaltenen Substanz nicht überlappt;
   - das Spektrum (S0) des untersuchten Gasgemischs wird aufgenommen und im Speicher abgespeichert;
   - der Wellenzahlbereich des oben genannten reinen Bereichs im aufgenommenen Spektrum wird bestimmt, und daraus wird der relative Anteil des störenden Gasbestandteils im untersuchten Gas berechnet;
   - das Spektrum des störenden Gasbestandteils wird mittels des berechneten Anteils errechnet, so daß man das im aufgenommenen Spektrum enthaltene störende Spektrum erhält;
   - das aufgenommene Spektrum wird durch das berechnete störende Spektrum dividiert, so daß man ein korrigiertes Spektrum (S1) erhält.

2. Verfahren nach Anspruch 1, dadurch gekennzeichnet, daß zur Rekonstruktion des Spektrums des störenden Gasbestandteils der Flächeninhalt des aufgenommenen Spektrums bei der o.g. Wellenzahl des reinen Bereichs bestimmt und mit dem entsprechenden Flächeninhalt des Spektrums der reinen Verbindung in einer der Menge des störenden Gasbestandteils entsprechenden Menge verglichen wird, woraus das Mengenverhältnis und daraus wiederum das oben genannte störende Spektrum berechnet wird.

3. Verfahren nach Anspruch 1 oder 2, dadurch gekennzeichnet, daß vor der Messung die Spektren von zwei oder mehr störenden Gasbestandteilen gespeichert werden, die verschiedenen mengenmäßigen Anteilen entsprechen und daß das Vergleichsspektrum, das dem aufgenommenen Spektrum bezüglich des störenden Gasbestandteils am nächsten kommt, für die Berechnung gewählt wird.

## Revendications

1. Procédé destiné à séparer, les unes des autres, des bandes d'absorption d'un spectre qui se recouvrent, dans lequel une partie des bandes d'absorption d'un gaz en cours de mesure et d'un composé gazeux interférant se produisent dans la même zone de longueurs d'onde, caractérisé en ce que le procédé est constitué par les étapes suivantes:
   - un spectre pur du composé gazeux interférant, à la teneur comparative, est entré dans une mémoire;
   - il est choisi une zone pure de longueurs d'onde du spectre du composé gazeux interférant, qui ne recouvre pas le spectre d'une autre substance contenue dans le gaz en cours d'investigation;
   - le spectre (S0) du mélange gazeux en cours d'investigation est mesuré et entré dans la mémoire;
   - la zone de longueurs d'onde de la zone pure mentionnée ci-dessus est déterminée à partir du spectre mesuré, et la valeur de la teneur relative du composé gazeux interférant dans le gaz en cours d'investigation est calculée par ce moyen;
   - le spectre du composé gazeux interférant est calculé au moyen de la valeur calculée de la teneur, lorsque le spectre interférant contenu dans le spectre mesuré est obtenu;
   - le spectre mesuré est divisé par le spectre d'interférence calculé, grâce à quoi un spectre corrigé (S1) est obtenu.

2. Procédé selon la revendication 1, caractérisé en ce que la surface du spectre mesuré est déterminée à la longueur d'onde mentionnée ci-dessus de la zone pure, afin de reconstituer le spectre du composé gazeux interférant, et cette surface est comparée à la surface correspondante calculée à partir du spectre pur du composé gazeux interférant à une teneur comparative, grâce à quoi la relation de teneur est calculée, et par suite le spectre interférant mentionné ci-dessus.

3. Procédé selon la revendication 1 ou 2, caractérisé en ce que les spectres de deux composés gazeux interférants ou davantage, qui correspondent à des valeurs différentes de teneurs, sont entrés avant la mesure, et le spectre comparatif qui est le plus proche du spectre mesuré en liaison avec le composé gazeux interférant est choisi parmi ces spectres.

FIG. 1

FIG. 2

EP 0 463 019 B1

```
*anna spektrin nimi              (give the name of the spectrum)
&enter a2
do sclear
*Odota hetki                     (wait)
*
*
do display off
set wait off
quant h2o sample delete
quant sample &a2 unknown solution 1
quant h2o run into v36
retrieve x f0:&a2
&if v38 < 300 then L31
&if v38 < 1200 then L32
retrieve y w4:h2o;4a1
calc v1 = 1500
&goto L33

&L31 *
retrieve y w4:bb121
calc v1 = 150
&goto L33
&L32 *
retrieve y w4:h2o;0a1
calc v1 = 530
&L33 *
div y 100 y
log y z
calc v35 = v38/v1
&def a7 = v35
mult z &a7 y
antilog y z
mult z 100 z

div x z y

set wait on
do display on
view y
save y f1:&a2
do sclear

*valmis                          (ready)
*
*
```

# FIG. 3